# EUROPEAN PATENT APPLICATION

(11) **EP 2 135 847 A1**
(43) Date of publication of application: **23.12.2009**
(21) Application number: 08722366.5
(22) Date of filing: 18.03.2008
(51) Int. Cl.: C02F 1/50, B01D 29/62, B01D 29/66, B63B 13/00, C02F 1/76, C02F 1/78

(54) **METHOD OF TREATING BALLAST WATER AND APPARATUS THEREFOR**

(30) Priority: 22.03.2007 JP 2007075024
(71) Applicant: Metawater Co., Ltd., Minato-ku Tokyo 105-6029 (JP)
(72) Inventor: AOKI, Nobuhiro, Minato-ku, Tokyo 1056029 (JP)
(74) Representative: Naylor, Matthew John
(86) International application number: PCT/JP2008/054972
(87) International publication number: WO 2008/114793

(57) **Abstract**

At the time of loading a ship, ballast water which has been charged in a ballast tank 3 is sent to a ceramic filter membrane 4 having a mesh of 9 to 12 µm by a filtration pump 5, and at the time of unloading, seawater which is to be ballast water is sent to the ceramic filter membrane 4 by the filtration pump 5, so as to be filtrated under pressure. Thus, marine organisms larger in size than this mesh are removed. The permeated water containing marine organisms smaller in size than the mesh is sterilized with a chemical agent made of chlorine or ozone in a facility for sterilizing with chemical agent 6, and then discharged into the sea or poured into the ballast tank. With this, it is possible to purify a large amount of ballast water, in a short time, into a level at which the water quality standard according to the guideline can be cleared without requiring any large-sized facility or any high-concentration chemical agent.

## Description

### Technical Field

The present invention relates to a method and apparatus for treating ballast water loaded in a ballast tank of a ship.

### Background Art

As for tankers and cargo ships, their hull is unfavorably raised from the surface of the sea in the state that the load thereof is small. Therefore, the tankers and the ships have a large ballast tank, and a large volume of seawater is contained in the ballast tank at the same time of unloading the ship, to thereby maintain the stability of the hull. In particular, in the case of very large tankers, the amount of ballast water reaches as enormous a volume as 100,000 tons.

For example, in terms of a tanker which goes to an oil producing country and back to Japan to import crude oil to Japan, seawater of the bay is charged into the ballast tank when the ship is unloaded in Japan, and the ballast water is discharged when crude oil is loaded in the oil producing country. For this reason, there is caused a problem that small-size marine organisms, plankton, bacteria, and others that are living in the ballast water are discharged into the coast of the oil producing country so that the ecological system is disturbed.

Such a disturbance of the ecological system is also caused by the adhesion of shellfishes onto hulls. However, a main cause thereof was considered to be based on the discharge of ballast water. Thus, in 2004, the International Convention for the Control and Management of Ships' Ballast Water and Sediments was concluded. According to this convention, large-sized ships (provisionally, ships of 5000 tons or more in weight) built in and after 2009 must be provided with an apparatus for treating ballast water.

According to a guideline established in 2005, the water quality standard thereof is very strict as follows: the number of marine organisms (mainly zooplankton) of 50 µm or more in size is 10 or less per 1 m³; the number of marine organisms of 10 to 50 µm in size (mainly phytoplankton) is 10 or less per 1 mL; the number of colon bacilli is 250 CFU or less per 100 mL; and the number of cholera vibrios is 1 CFU or less per 100 mL. It appears that no technique that satisfies this guideline has been developed yet up to date.

Thus, a great number of manufacturers have been developing the technique. For example, Patent Documents 1 and 2 state that ballast water is produced by filtrating seawater with a filter membrane having a very fine pore diameter, such as a precise filtration membrane, an ultrafilter membrane, or a reverse osmotic membrane. However, these membrane devices are small in filtration flux; thus, a long period is required to produce a very large volume of ballast water. It is required that large-sized tankers are charged with ballast water of 100, 000 tons in volume in several days. In order to obtain the amount of filtrated water corresponding thereto, it is indispensable to increase the size of the membrane device. Thus, the membrane device is not suitable for being set up on a ship. When the membrane device is set onto the land, the size of a facility for producing ballast water can be increased; however, piers where ship can be unloaded are limited. Thus, the large-sized facility is unpractical.

Patent Document 3 describes a method for preparing divided ballast tanks, and shifting ballast water into an empty tank within a ship while infusing ozone generated in an ozone generator into the water, thereby producing sterilized ballast water. This method is excellent since ballast water can be sterilized while sailing. However, the method has a drawback that a useless space is generated within a ship since an empty ballast tank is required. In order to make relatively large-size marine organisms living in ballast water extinct, it is necessary to increase the concentration of ozone. Thus, the size of the ozone generator is required to be increased, and a corrosion of the pipes, or the like may occur due to the high-concentration ozone.
Patent Document 1: Japanese Patent Application Laid-Open No. 2005-329300
Patent Document 2: Japanese Patent Application Laid-Open No. 2006-729
Patent Document 3: Japanese Patent Application Laid-Open No. 2006-239566

### Disclosure of the Invention

### Problems to be solved by the invention

Accordingly, an object of the present invention is to provide a novel method and apparatus for treating ballast water that are capable of purifying, in a short time, a large volume of ballast water into a level at which the water quality standard according to the guideline can be passed without requiring any large-sized facility, any empty ballast tank within a ship, or high-concentration ozone.

### Means for Solving the Problems

The method for treating ballast water according to claim 1, which has been made to solve the problems above, includes: sending the ballast water which has been loaded in a ballast tank to a ceramic filter membrane of 9 to 12 µm mesh at the time of loading a ship, so as to filtrate the ballast water under pressure, thereby removing marine organisms larger in size than the mesh; sterilizing the permeated water containing marine organisms smaller in size than the mesh, with a chemical agent; and discharging the sterilized water into the sea.

The method for treating ballast water according to claim 2 includes: sending seawater to a ceramic filter membrane of 9 to 12 µm mesh at the time of charging the ballast water into a ship, so as to filtrate the ballast water under pressure, thereby removing marine organisms larger in size than the mesh; and sterilizing the permeated water containing marine organisms smaller in size than the mesh, with a chemical agent to prepare fresh ballast water.

In these inventions, it is preferred that the chemical agent used in the sterilization of the permeated water is chlorine or ozone. It is also preferred that the pressure for the filtration with the ceramic filter membrane is from 0.1 to 1 MPa, and the filtration flux is 20 m/day or more. It is also preferred that the large-size marine organisms deposited on the membrane surface of the ceramic filter membrane are made extinct by back washing under a pressure not lower than the pressure for the filtration. It is also preferred that the ceramic filter membrane is dried while sailing after the completion of the loading to thereby peel the deposits off the membrane surface. When ozone is used as the chemical agent for sterilization, it is also possible to wash the ceramic membrane with the ozone. It is preferred that such filtration with the ceramic filter membrane under the pressure and such sterilization of the permeated water with the chemical agent are all conducted on a ship.

The apparatus of the present invention for treating ballast water, which has been made to solve the problems above, includes, on a ship, a ceramic filter membrane of 9 to 12 µm mesh; a filtration pump for forcing the ballast water, or seawater that is to be the ballast water, charged in the ship, into the ceramic filter membrane; a facility for sterilizing the permeated water with a chemical agent; a facility for subjecting the ceramic filter membrane to back washing; and a tank for collecting the resultant from the back washing.

### Effects of the invention

According to the present invention, at the time of loading a ship, that is, at the time of discharging ballast water, the ballast water which has been charged into the ballast tank is filtrated with a ceramic filter membrane of 9 to 12 µm mesh under pressure, or at the time of charging ballast water into the ballast tank, seawater is filtrated with the same ceramic filter membrane under pressure. The ceramic filter membrane which has a large mesh and can undergo the application of a high filtration pressure of, for example, 0.1 to 1 MPa, enables high-speed filtration of a filtration flux of 20 m/day or more, and the volume of filtered water per membrane area is large. Thus, a very large volume of ballast water can be rapidly filtrated by means of a facility of a small size that can be set up on a ship.

As described above, in the present invention, marine organisms having a size larger than 9 to 12 µm are removed with the membrane surface, and then the permeated water containing small-size marine organisms and bacteria transmitted through the ceramic filter membrane are sterilized with a chemical agent. The sterilized water is then discharged into the sea when the ballast water is discharged. When ballast water is charged, the water is stored in the ballast tank. The marine organisms and bacteria having a size smaller than 9 to 12 µm can be sterilized even with low-concentration ozone or chlorine. Thus, the permeated water can be purified into a level at which the water quality standard according to the guideline can be cleared without using high-concentration ozone.

The marine organisms removed with the membrane surface of the ceramic filter membrane, which have a size larger than 9 to 12 µm, need to be treated separately. However, the ceramic filter membrane, which can withstand high pressure, can undergo back washing under a pressure not lower than the pressure for the filtration. By impactive pressure applied at the time, most of the organisms become extinct. Additionally, the amount thereof is made small by the filtration; thus, the subsequent treatment also becomes easy. In the present invention, the ceramic filter membrane is used only when ship is loaded and unloaded, and the filter membrane is not used thereafter. Therefore, it is possible to dry the ceramic filter membrane to peel the deposits off the membrane surface while sailing after the completion of the loading. Thus, the filter membrane is regenerated easily.

### Brief Description of the Drawings

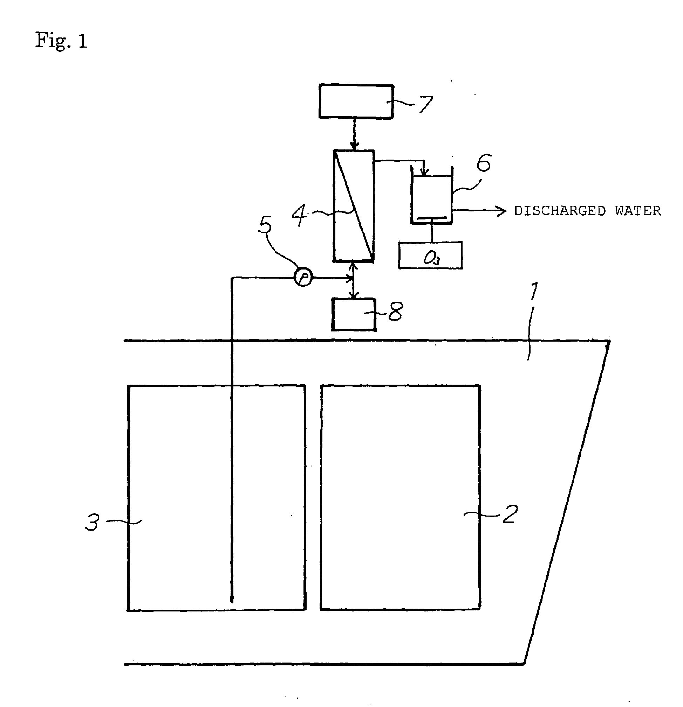

FIG. 1 is an explanatory diagram showing an embodiment of the present invention.

### Description of Reference Numerals

- 1: hull
- 2: crude oil tank
- 3: ballast tank
- 4: ceramic filter membrane
- 5: filtration pump
- 6: facility for sterilizing with chemical agent
- 7: facility for back washing
- 8: collecting tank

### Best Mode for Carrying Out the Invention

A preferred embodiment of the present invention will be described hereinafter.
FIG. 1 is an explanatory diagram showing the embodiment of the invention. Reference numbers 1, 2 and 3 represent a tanker hull, a crude oil tank, and a ballast tank, respectively. For the convenience of the description, in this embodiment, the description is given about a tanker. However, needless to say, the present invention may be applied to a cargo ship or any other ship. On the hull 1 are set up a ceramic filter membrane 4, a filtration pump 5, a facility for sterilizing with chemical agent 6, a facility for back washing 7 for the ceramic filter membrane, and a tank 8 for collecting the resultant from the back washing.

The ceramic filter membrane 4 is a filter of 9 to 12 µm mesh, and a porous body obtained by sintering ceramic particles at high temperature is used. Such a ceramic filter membrane 4 has a larger membrane strength compared with polymeric membranes. For example, a ceramic filter membrane made of alumina and manufactured by the Applicant Company can withstand a high pressure of about 5 MPa. The shape of the membrane is not specified. However, the use of a monolithic type ceramic filter membrane is advantageous since the diameter of a primary-side channel through which ballast water flows can be made as large as several millimeters so that the channel is not easily clogged with foreign substances.

The reason why the mesh of the ceramic filter membrane 4 is set into the range of 9 to 12 µm is that the size of marine organisms is classified by the guideline into a size of 10 µm or more and a size of 10 µm or less. When the mesh of the ceramic filter membrane 4 is set into this range, marine organisms having a size of 10 µm or more and those having a size of 10 µm or less can be sorted. The ceramic filter membrane 4 having such a large mesh enables setting the filtration flux to 20 m/day or more; therefore, the filtration flow rate per unit area is very large. Thus, the ceramic filter membrane 4 is suitable for treating 100,000 tons of ballast water in several days.

The filtration pump 5 is used for sucking, at the time of loading into the crude oil tank 2, ballast water which has been stored in the ballast tank 3, and sending the water to the ceramic filter membrane 4 while applying a pressure to the water to thereby conduct filtration under pressure. The applied filtration pressure is preferably set to a high pressure of about 0.1 to 1 MPa. Since the membrane strength of the ceramic filter membrane 4 is large, the filtration may be conducted under such a high pressure. In the case of using, in particular, the ceramic filter membrane 4 having a large mesh of 9 to 12 µm to conduct high-pressure filtration, a very large amount of ballast water can be filtrated at a rate equivalent to the rate of the loading into the crude oil tank 2.

When the filtration of the ballast water with the membrane is conducted in this way, marine organisms having a size equal to or larger than 9 to 12 µm in the ballast water are filtrated so that the organisms are deposited onto the membrane surface so as to be removed. However, marine organisms and bacteria having a size equal to or smaller than 9 to 12 µm transmit through the ceramic filter membrane 4. The ceramic filter membrane 4 is subjected to back washing at a frequency of about once every three hours by use of the facility for back washing 7, so that the deposits are collected into the collecting tank 8 together with discharged water resulting from the back washing. The use period for each filtration is as short as within several days; thus, the ceramic filter membrane 4 does not need to be washed with any chemical agent. The ceramic filter membrane 4 has a large strength; thus, no problem is caused even when hard materials, such as shellfishes, flow thereinto together with the ballast water. The permeated water containing smaller-size marine organisms and bacteria transmitted through the ceramic filter membrane 4 is sent into the facility for sterilizing with chemical agent 6, and then sterilized with a chemical agent. The sterilized water is then discharged into the sea.

In general, a high-concentration chemical agent is necessary to make large-size marine organisms extinct. However, small-size marine organisms can be made extinct with a low-concentration chemical agent. For this reason, the concentration of the chemical agent used in the facility for sterilizing with chemical agent 6 can be made lower than in a case where ballast water contains large-size marine organisms.

The sterilization with chemical agent is preferably conducted using chlorine or ozone. It is because chlorine can easily be produced using seawater as a raw material, and further, no problem is caused even when chlorine is discharged into the seawater. Further, ozone can be produced using air as a raw material. Thus, there is an advantage that no chemical agent is required to be loaded on a ship. Any chemical agent requires electric power for production. However, no problem is caused since an anchoring ship has a sufficient capacity for power generation. In the case of using ozone, it is not necessary to increase the ozone concentration in the facility for sterilizing with chemical agent 6, either. Thus, problems, such as corrosion of the pipes can be prevented.

In this way the permeated water containing bacteria transmitted through the ceramic filter membrane 4 is sent to the facility for sterilizing with chemical agent 6, and sterilized with a chemical agent. The sterilized water is then discharged into the seawater. With this, it is possible to fully attain the water quality standard prescribed in the guideline and the disturbance of the ecological system due to the discharge of ballast water can be prevented.

On the other hand, the marine organisms which are of a size equal to or larger than the mesh and deposited on the membrane surface of the ceramic filter membrane 4 are taken out together with discharged water resulting from the back washing. At the time of the back washing, a back washing pressure higher than the pressure for the filtration, for example, a back washing pressure of 0.45 to 5 MPa is applied to the membrane surface. At this time, impactive pressure is applied thereto so that most of the deposited marine organisms become extinct. This is because large-size marine organisms cannot generally withstand an abrupt change in pressure.

As for the collected materials in the collecting tank 8, it is advisable to make the marine organisms in the tank completely extinct in an appropriate way, such as heating or treatment with a chemical agent, and then dispose of the resultant water into the sea. However, the amount of the water of the back washing is 1/100 or less of that of the ballast water; thus, the water can be brought back as it is and incinerated on the land.

As described above, according to the present invention, ballast water is treated at the same time of loading the ship; therefore, the ceramic filter membrane 4 is used in a relatively short time. The ceramic filter membrane 4 is not used after the completion of the loading. For this reason, the membrane is left as it is while sailing so as to dry the membrane surface. As a result, the deposits on the membrane surface can be peeled off. Of course, by conducting washing with an ordinary chemical agent or washing with ozone during this period, the performance of the membrane can be restored.

The above description has been made mainly about the invention according to claim 1, wherein ballast water is treated at the same time of loading a ship. However, as in the invention according to claim 2, it is also possible to treat seawater in the similar way at the same time of unloading the ship to charge the treated water into a ballast tank as ballast water. Since the treated ballast water contains no marine organisms, there is no possibility that the treated water disturbs the ecological system even when the water is discharged at a port of loading.

As descried above, according to the present invention, a small-sized facility which can be set up on a ship makes it possible to purify a large amount of ballast water in a short time into a level at which the water quality standard according to the guideline can be passed, and to prevent the disturbance of the ecological system due to the discharge of the ballast water. Moreover, according to the present invention, no extra ballast tank is required since ballast water is treated at the same time of loading, or unloading the ship. Furthermore, according to the present invention, marine organisms are separated and treated in accordance with the size thereof. Thus, there are many advantages, for example, that the concentration of chemical agent for sterilization can be lowered.

## Claims

1. A method for treating ballast water, comprising:
sending the ballast water which has been loaded in a ballast tank to a ceramic filter membrane of 9 to 12 µm mesh at the time of loading a ship, so as to filtrate the ballast water under pressure, thereby removing marine organisms larger in size than the mesh; sterilizing the permeated water containing marine organisms smaller in size than the mesh, with a chemical agent; and discharging the sterilized water into the sea.

2. A method for treating ballast water, comprising:
sending seawater to a ceramic filter membrane of 9 to 12 µm mesh at the time of charging the ballast water into a ship, so as to filtrate the ballast water under pressure, thereby removing marine organisms larger in size than the mesh; and sterilizing the permeated water containing marine organisms smaller in size than the mesh, with a chemical agent to prepare fresh ballast water.

3. The method for treating ballast water according to claim 1 or 2, wherein the sterilizing with the chemical agent is conducted, using chlorine or ozone.

4. The method for treating ballast water according to claim 1 or 2, wherein the pressure for the filtration of the ceramic filter membrane is from 0.1 to 1 MPa, and the filtration flux is 20 m/day or more.

5. The method for treating ballast water according to claim 1 or 2, wherein the large-size marine organisms deposited on the surface of the ceramic filter membrane are made extinct by back washing under a pressure higher than the pressure for the filtration.

6. The method for treating ballast water according to claim 1 or 2, wherein the ceramic filter membrane is dried while sailing to peel the deposits off the membrane surface.

7. The method for treating ballast water according to claim 1 or 2, wherein the filtrating with the ceramic filter membrane under pressure and the sterilizing of the permeated water with the chemical agent are conducted on a ship.

8. An apparatus for treating ballast water, comprising, on a ship, a ceramic filter membrane of 9 to 12 µm mesh; a filtration pump for forcing the ballast water, or seawater that is to be the ballast water, charged in the ship into the ceramic filter membrane; a facility for sterilizing the resultant permeated water with a chemical agent; a facility for subjecting the ceramic filter membrane to back washing; and a tank for collecting the resultant from the back washing.
